# EUROPÄISCHE PATENTSCHRIFT

(11) **EP 1 701 833 B1**
(45) Veröffentlichungstag und Bekanntmachung des Hinweises auf die Patenterteilung: **30.07.2008**
(21) Anmeldenummer: 04803236.1
(22) Anmeldetag: 24.11.2004
(51) Int. Cl.: B29C 47/08

(54) **DIREKTANGETRIEBENER EXTRUDER MIT ADAPTER**
DIRECTLY DRIVEN EXTRUDER WITH AN ADAPTER
EXTRUDEUSE A ENTRAINEMENT DIRECT POURVUE D'UN ADAPTATEUR

(30) Priorität: 11.12.2003 DE 10357884
(43) Veröffentlichungstag der Anmeldung: 20.09.2006
(73) Patentinhaber: Windmöller & Hölscher KG, 49525 Lengerich (DE)
(72) Erfinder: MIDDELBERG, Gerhard, 49525 Lengerich (DE); HÜLSMEIER, Werner, 49525 Lengerich (DE); BECKMANN, Hans-Udo, 58509 Lüdenscheid (DE)
(86) Internationale Anmeldenummer: PCT/EP2004/013293
(87) Internationale Veröffentlichungsnummer: WO 2005/058579

(56) Entgegenhaltungen:
- WO-A-20/04005005
- DE-A1- 10 329 035
- US-A- 3 802 670
- US-A1- 2004 223 403

## Beschreibung

Die Erfindung betrifft eine Extrudiervorrichtung gemäß dem Oberbegriff des Anspruchs 1.

Gewöhnliche Extrudiervorrichtungen weisen eine Extruderschnecke auf, die von einem Schneckenantrieb über ein Getriebe angetrieben werden.

Eine ein Getriebe umfassende Vorrichtung verwandter Art ist in der Patentschrift US 3,802,670 offenbart. Diese Druckschrift offenbart eine Vorrichtung mit zwei Extruderschnecken und einem Schneckenantrieb. Der Antriebsmotor treibt über eine Getriebestufe die beiden Schnecken an. Es sind weiterhin lösbare Drehmomentübertragungselemente vorgesehen, welche zwischen der Getriebestufe und den Extruderschnecken Drehmoment übertragen und bei Umrüstarbeiten gelöst werden können. Die Drehmomeritübertragungselemente umfassen dabei eine Drehmomenfübertragungsstelle, an der Drehmoment von einer Hülse auf einen von der Hülse zumindest teilweise umfassen Anschlussabschnitt übertragen wird.

Solche Getriebe sind allerdings mechanisch kompliziert und wartungsintensiv, so dass man in jüngster Zeit bestrebt ist, Extruderschnecken direkt - das heißt ohne Getriebe - anzutreiben.

Mit dem Aufkommen von so genannten Hohlwellenmotoren ist es nunmehr möglich, derartige direkt angetriebenen Extrudervorrichtungen mit kleineren Abmessungen zu bauen. So schlägt beispielsweise die EP 1 182 027 A1 eine Extrusionsvorrichtung vor, bei der die Extruderschnecke einen Anschlussabschnitt aufweist, der in eine Hülse eingesteckt und mit dieser dann drehfest verbunden ist oder wird. Anschlussabschnitt und Hülse sind dabei von einem bereits erwähnten Hohlwellenmotor umgeben, welcher das ihm erzeugte Antriebsdrehmoment über Drehmomentübertragungsetemente auf die Hülse geben kann. Aufgrund der Tatsache, dass der Hohlwellenmotor den Anschlussabschnitt der Extruderschnecke umgibt, weist die gesamte Extrusionsvorrichtung eine relativ kurze Baulänge auf.

Nachteilig ist bei dieser Konstruktion allerdings, dass die Drehmomentübertragungselemente schwer zugänglich sind. Der Vorteil der etwas kürzeren Baulänge wird also durch länger andauernde Wartungsarbeit mehr als zunichte gemacht.

Aufgabe der vorliegenden Erfindung ist es daher, eine bekannte getriebelose Extrusionsvorrichtung derart zu verbessern, dass die Drehmomentübertragungselemente leichter zugänglich sind.

Die Aufgabe wird gelöst durch das Merkmal des kennzeichnenden Teils im Anspruch 1.

Demnach liegen die Drehmomentübertragungselemente in axialer Richtung außerhalb des Rotors. Auf diese Weise können die Drehmomentübertragungselemente händisch erreicht werden, ohne den Hohlwellenmotor mit seinem äußeren Stator und den innenliegenden Rotor entfernen zu müssen. In der Sprache der vorliegenden Druckschrift wird unter Anschlussabschnitt jedwede Fortsetzung oder Verlängerung der Extruderschnecke verstanden. Hierbei ist es ohne Belang, ob dieser Anschlussabschnitt einstückig mit der Extruderschnecke ausgeprägt oder mechanisch mit dieser verbunden ist.

In weiterer Ausgestaltung der Erfindung sind die Drehmomentübertragungselemente zwischen der Extruderschnecke und dem Antriebsmotor angeordnet, um eine Extruderschnecke mit einem möglichst kurzen Anschlussabschnitt einsetzen zu können.

Vorteilhaft ist es, wenn die Drehmomentübertragungselemente eine axial verlaufende Schraubverbindung umfassen, mit welcher die Hülse und der Anschlussabschnitt drehfest verbindbar sind. In diesem Fall lassen sich die Hülse und der Anschlussabschnitt schnell und unkompliziert voneinander trennen. Diese Schraubverbindung kann durch die Hohlwelle des Antriebsmotors ohne weiteres erreicht werden.

In einer weiteren vorteilhaften Ausgestaltung der Erfindung ist es vorgesehen, dass zumindest eines der Drehmomentübertragungselemente zumindest teilweise von einem Gehäuse umgeben ist, welches mit dem Gehäuse der Extruderschnecke fest verbunden ist. Damit ist es möglich, die Drehmomentübertragungselemente vor äußeren Störeinflüssen, wie etwa Staub, zu schützen. Zusätzlich kann an diesem Gehäuse auch das Gehäuse des Antriebsmotors mit dem Gehäuse lösbar angebracht sein. Sämtliche Elemente der Extrudiervorrichtung bilden dann eine Einheit, die dann beispielsweise bewegbar ausgestaltet sein kann.

Weiterhin ist es besonders vorteilhaft, wenn sich eines der Drehmomentübertragungselemente mittels Wälz- und/oder Kugellagern an dem umgebenen Gehäuse abstützt. Versuche haben gezeigt, dass im Betrieb auf die Extruderschnecke erhebliche Kräfte wirken, die mit geeigneten Lagern abgefangen werden müssen. Werden handelsübliche Hohlwellenmotoren eingesetzt, deren Lager für die in Extrudern herrschenden Kräfte nicht ausgelegt sind, so ist mit häufigen Lagerschäden zu rechnen. Eine konstruktive Anpassung von Hohlwellenmotoren an die genannten Anforderungen würde hingegen zu sehr hohen Kosten führen, weshalb diese Lösung nachteilig wäre.

Vorteilhafterweise sind die eingesetzten Wälzlager Schräglager, die in der Lage sind Axialkräfte aufzunehmen, dabei aber selbstzentrierend sind.

Weitere Ausgestaltungen der Erfindung sind den Unteransprüchen und der Zeichnung zu entnehmen. Hierin zeigen:
- Fig. 1: eine erfindungsgemäße Extrudiervorrichtung und
- Fig. 2: eine erfindungsgemäße Extrudiervorrichtung mit einem Antriebsmotor mit Vollwelle
- Fig. 3: eine gleichartige Extrudiervorrichtung mit zusätzlicher Buchse
- Fig. 4: eine weitere Ausführungsform der erfindungsgemäßen Extrudiervorrichtung
- Fig. 5: eine weitere Ausführungsform der erfindungsgemäßen Extrudiervorrichtung

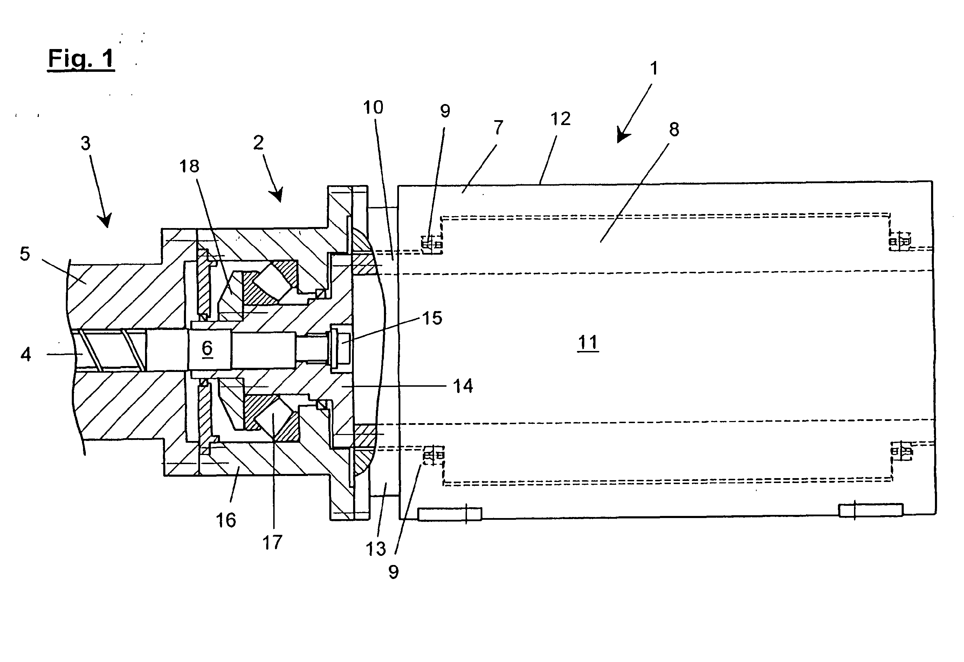

Die Fig. 1 zeigt eine erfindungsgemäße Extrudiervorrichtung, die aus einem Antriebsmotor 1, Drehmomentübertragungselemente, die in ihrer Gesamtheit mit 2 bezeichnet sind, und einem Extruder 3. Der Extruder 3 besteht, wie in der Praxis üblich, im wesentlichen aus einer Extruderschnecke 4, welche in einem Extrudergehäuse 5 drehbar gelagert ist. Der Motor 1 besteht aus einem Stator 7, welcher von einem Motorgehäuse 12 umgeben ist, und einem Rotor 8, der sich über Radiallager 9 am Stator 7 abstützt. Der Rotor 8 ist hohlwellenartig, so dass er einen rohrförmigen Innenraum 11 aufweist. Der Rotor 8 umfasst weiterhin einen Ansatz 10, welcher aus dem Stator 7 herausragt und von einem Gehäuseansatz 13 umgeben ist.

Um das vom Antriebsmotor 1 erzeugte Drehmoment auf die Extruderschnecke 4 übertragen zu können, ist stirnseitig an dem Ansatz 10 des Rotors 8 eine Hülse 14 angebracht. Diese Verbindung ist drehfest und kann über eine Schraub-, aber auch über eine Steckverbindung hergestellt werden. Diese Hülse 14 umschließt den Anschlussabschnitt 6 der Extruderschnecke 4. Zur Übertragung des an der Hülse 14 anliegenden Drehmoments auf die Extruderschnecke 4 ist deren Anschlussabschnitt 6 mit einer Schraube 15 an der Hülse 14 drehfest verschraubt, wobei die Drehfestigkeit vor allem durch ein Nut-Feder-System oder einem gleichwertigen System zwischen Anschlussabschnitt 6 und Hülse 14 erzielt wird. Selbstverständlich können auch mehrere Schrauben vorgesehen sein. Diese Schrauben 15 lassen sich von der dem Extruder 3 abgewandten Seite des Antriebsmotors 1 durch dessen rohrförmigen Innenraum 11 bequem erreichen. Der Anschlussabschnitt 6 stützt sich über Ringstufen in axialer Richtung auf der Hülse 14 ab, so dass die Hülse 14 und der Anschlussabschnitt 6 relativ zueinander axial unverschieblich sind. Die Verbindung von Hülse 14 und Anschlussabschnitt 6 kann so, beispielsweise für Wartungsarbeiten, gelöst werden. Die Extruderschnecke 4 kann nach Lösen der Verbindung in Richtung vom Antriebsmotor 6 aus dem Extrudergehäuse 5 herausgezogen werden.

Die Hülse 14 und der Anschlussabschnitt 6 sind von einem Gehäuse 16 umgeben. Die verschiedenen Gehäuse 5, 13, 16 und 12 sind miteinander verbunden, so dass sie eine Gehäuseeinheit bilden. Das Gehäuse 16 umschließt ein Wälzlager 17, auf welchem sich wiederum die Hülse 14 abstützt. Auf der Hülse 14 ist zusätzlich ein Ring 18 befestigt, so dass die Hülse 14 gegenüber dem Gehäuse 16 unverschieblich gelagert ist. An dieser Stelle ist es erwähnenswert, dass im Betrieb der von der Extruderschnecke 4 ausgehende Druck in axialer Richtung zum Antrieb verläuft. Das Wälzlager 17 ist dazu in der Lager, die an der Extruderschnecke 4 auftretenden Axialkräfte abzufangen.

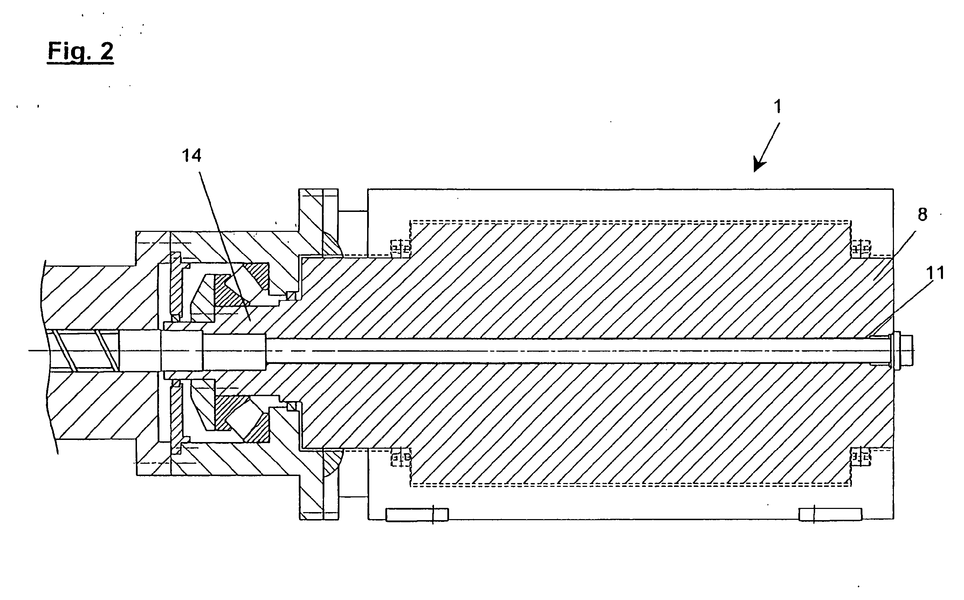

Die Fig. 2 zeigt eine Ausführungsform der Erfindung in der ein Antriebsmotor 1 mit einer Vollwelle, in die ein rohrförmiger Innenraum 11 gebohrt wurde, deren Durchmesser ausreichend ist, um die Schraube 25 aufzunehmen, die im Gegensatz zur in Fig. 1 dargestellten Schraube 5 lang genug ist, um durch den Antriebsmotor 1 hindurch zu reichen. Die Hülse 14 und der Rotor 8 sind in diesem Ausführungsbeispiel einstückig ausgebildet. Die Funktion der einzelnen Bauteile bleibt im Vergleich zur in Fig. 1 dargestellten Ausführungsform jedoch erhalten.

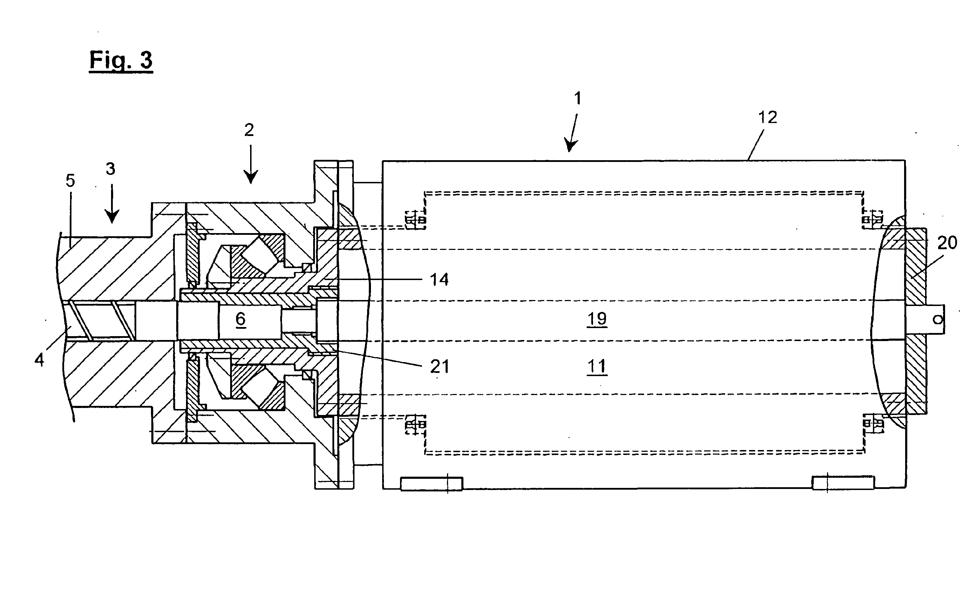

Die Fig. 3 zeigt eine im Vergleich mit der Fig. 1 sehr ähnliche Ausführungsform der vorliegenden Erfindung. In diesem Fall ist innerhalb der Hülse 14 eine Zwischenhülse 21 drehfest befestigt. Die Zwischenhülse 21 kann dabei in die Hülse 14 eingeschraubt oder über ein Nut-Feder-System mit dieser verbunden sein. Der Anschlussabschnitt 6 der Extruderschnecke 4 stützt sich dabei über Ringstufen an der Zwischenhülse 21 ab. Bei dieser Anordnung kann die Extruderschnecke 4 zusammen mit der Zwischenhülse 21 durch den rohrförmigen Innenraum 11 des Antriebsmotors 1 aus dem Extrudergehäuse 5 herausgezogen werden. Weiterhin ist im Vergleich mit dem in Fig. 1 vorgestellten Ausführungsbeispiel die Schraube 15 durch einen Bolzen 19 ersetzt worden. Dieser Bolzen 19 reicht mindestens durch den gesamten rohrförmigen Innenraum des Antriebsmotors 1 und besitzt analog zur Schraube an einem Ende ein Gewinde, so dass mit diesem Bolzen 19 eine drehfeste Verbindung zwischen dem Anschlussabschnitt 6 der Extruderschnecke 4 und der Hülse 14 hergestellt werden kann.

Der Bolzen 19 kann an seinem dem Gewinde gegenüber liegenden Ende in seinem Durchmesser kleiner gestaltet sein. Auf diesen dünneren Abschnitt kann eine Buchse 20 aufgeschoben sein, welche wiederum an dem Motorgehäuse 12 befestigt ist. Auf diese Weise wird für den Bolzen 19 ein Widerlager gebildet, wodurch der Bolzen 19 die Zwischenhülse 21 abstützen kann.

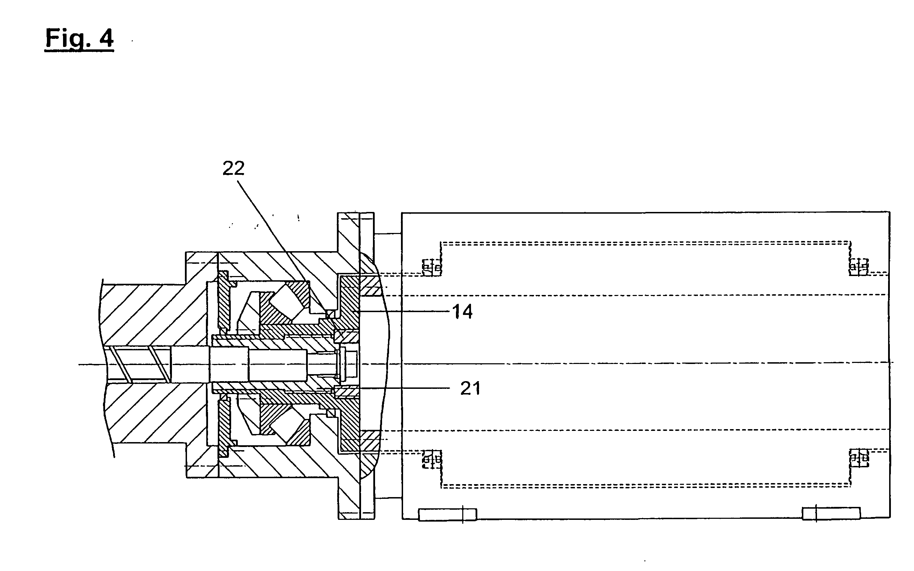

Die Fig. 4 zeigt eine Extrudiervorrichtung mit einer Zwischenhülse 21, wie sie bereits in Figur 3 dargestellt worden ist. Zur Verhinderung der axialen Verschiebung der Zwischenhülse 21 innerhalb der Hülse 14 ist in diese ein Sicherungsring 22 eingeschraubt.

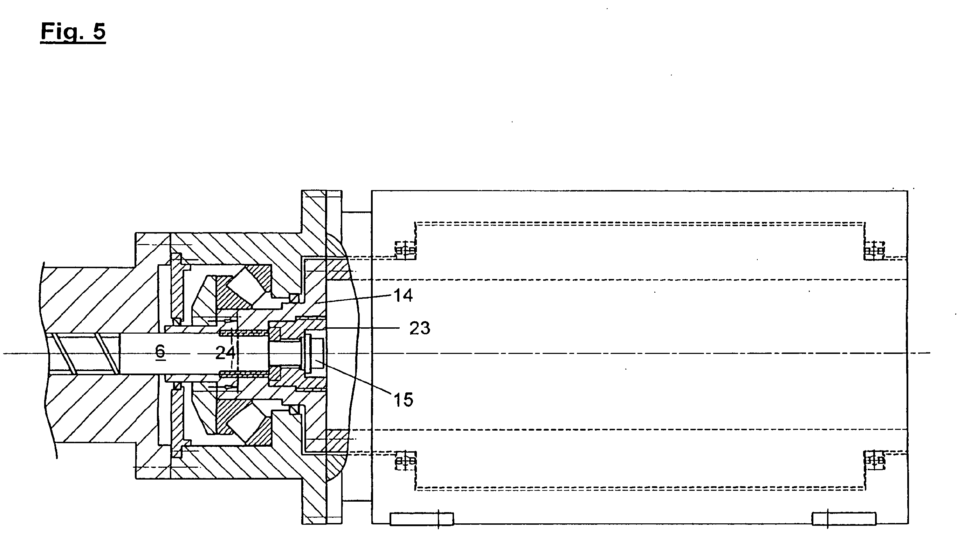

Die in Fig. 5 gezeigte Extrudiervorrichtung ist ähnlich zu derjenigen, die in Fig. 1 gezeigt ist. Hier sind der Anschlussabschnitt 6 und die Hülse 14 über Sicherungsstifte 24 verdrehsicher miteinander verbunden. Da diese Sicherungsstifte 24 axial verschieblich sind, werden diese durch die Sicherungsring 23, der in der Hülse 14 befestigt, beispielsweise eingeschraubt, ist, festgelegt. Anschließend kann mit der Schraube 15 der Anschlussabschnitt mit der Hülse verbunden werden.

### Bezugszeichenliste

| | |
|---|---|
| 1 | Antriebsmotor |
| 2 | Drehmomentübertragungselemente |
| 3 | Extruder |
| 4 | Extruderschnecke |
| 5 | Extrudergehäuse |
| 6 | Anschlussabschnitt |
| 7 | Stator |
| 8 | Rotor |
| 9 | Radiallager |
| 10 | Ansatz |
| 11 | rohrförmiger Innenraum |
| 12 | Motorgehäuse |
| 13 | Gehäuseansatz |
| 14 | Hülse |
| 15 | Schraube |
| 16 | Gehäuse |
| 17 | Wälzlager |
| 18 | Ring |
| 19 | Bolzen |
| 20 | Buchse |
| 21 | Zwischenhülse |
| 22 | Sicherungsring |
| 23 | Sicherungsring |
| 24 | Sicherungsstift |
| 25 | |
| 26 | |
| 27 | |
| 28 | |
| 29 | |
| 30 | |

## Patentansprüche

1. Extrudiervorrichtung mit einer Extruderschnecke (4) und einem Schneckenantrieb (1, 2),
- welcher (1, 2) einen Antriebsmotor (1) umfasst,
- welcher einen äußeren Stator und einen innenliegenden Rotor (8) aufweist,
- welcher mit lösbaren Drehmomentübertragungselementen (6, 14, 15) verbindbar ist, welche zwischen dem Rotor (8) und der Extruderschnecke (4) Drehmoment übertragen und bei Umrüstarbeiten gelöst werden können,
- wobei die lösbaren Drehmomentübertragungselemente (6, 14, 15) eine Drehmomentübertragungsatelle umfassen, an der Drehmoment von einer Hülse (14) auf einen von der Hülse (14) zumindest teilweise umfassten Anschlussabschnitt (6) übertragen wird,
**dadurch gekennzeichnet,**
- **dass** der Rotor (8) des Antriebsmotors (1) im Betrieb getriebelos mit der Extruderschnecke (4) verbunden ist, so dass sich im Betrieb Rotor (8) und Extruderschnecke (4) mit gleicher Drehzahl drehen,
- **dass** die Hülse an einer Stirnseite des Rotors (8) des Antriebsmotors (1) befestigt ist und
- **dass** die Drehmomentübertragungsstelle in axialer Richtung außerhalb des Rotors (8) liegt.

2. Extrudiervorrichtung nach Anspruch 1,
**dadurch gekennzeichnet, dass**
sowohl Hülse als auch der Anschlussabschnitt vollständig außerhalb des Rotors liegen.

3. Extrudiervorrichtung nach einem der vorstehenden Ansprüche,
**dadurch gekennzeichnet, dass**
die Drehmomentübertragungselemente (6, 14, 15) zwischen dem Rotor (8) und der Extrudierschnecke (14) angeordnet sind.

4. Extrudiervorrichtung nach einem oder mehreren der vorstehenden Ansprüche,
**dadurch gekennzeichnet, dass**
die Drehmomentübertragungselemente (6, 14, 15) eine axial verlaufenden Schraubverbindung (15) umfassen, mit welcher die Hülse (14) und der Anschlussabschnitt (6) drehfest verbindbar sind.

5. Extrudiervorrichtung nach einem oder mehreren der vorstehenden Ansprüche,
**dadurch gekennzeichnet, dass**
zumindest eines der Drehmomentübertragungselemente (6, 14, 15) zumindest teilweise von einem Gehäuse (16), welches mit dem Gehäuse (5) der Extruderschnecke (4) fest verbunden ist, umgeben ist.

6. Extrudiervorrichtung nach Anspruch 5,
**dadurch gekennzeichnet, dass**
das Gehäuse (12) des Antriebsmotors (1) mit dem Gehäuse (16) lösbar verbunden ist, welches die Drehmomentüberiragungselemente (6, 14, 15) zumindest teilweise umgibt.

7. Extrudiervorrichtung nach Anspruch 5 oder 6,
**dadurch gekennzeichnet, dass**
sich zumindest eines der Drehmvmentübertragungselemente (6, 14, 15) mittels Wälz- und/oder Kugellager (17) an dem umgebenden Gehäuse (16) abstützt.

8. Extrudiervorrichtung nach vorstehendem Anspruch,
**dadurch gekennzeichnet, dass**
das Wälzlager (17) ein Schräglager ist, welches axiale Kräfte aufnehmen kann.

9. Extrudiervorrichtung nach einem der beiden vorstehenden Ansprüche,
**dadurch gekennzeichnet, dass**
dieses zumindest eine Drehmomentübertragungselement (6, 14, 15) die Hülse (14) ist.

## Claims

1. Extruder device with an extruder worm (4) and a worm drive (1, 2)
- which (1,2) includes a drive motor (1),
- which exhibits an outer stator and an inner rotor (8),
- which can be connected to detachable torque-transmitting elements (6, 14, 15), which transmits torque between the rotor (8) and the extruder worm (4) and which can be detached when retrofitting work occurs,
- where the detachable torque-transmitting elements (6, 14, 15) include a torque transmission point, at which torque is transmitted from one bushing (14) to a connecting section (6), which is at least partially encompassed by the bushing (14),
**characterized in that**
- that during operation the rotor (8) of the drive motor (1) is connected to the extruder worm (4) without gear in such a manner that rotor (8) and the extruder worm (4) rotate at the same speed during operation,
- that the bushing (14) is connected at a the face side of the rotor ((9 of the drive motor (1) and
- that the torque-transmission point in the axial direction is located outside the rotor (8).

2. Extruder device according to claim 1,
**characterized in that**
the bushing as well as the connecting section lie completely outside the rotor.

3. Extruder device according to one of the preceding claims,
**characterized in that**
the torque-transmitting elements (6, 14, 15) are arranged between the rotor (8) and the extruder worm (14).

4. Extruder device according to one or several of the preceding claims,
**characterized in that**
the torque-transmitting elements (6, 14, 15) include a screw connection (15) that runs in axial direction and with which the bushing (14) and the connecting section (6) can e connected so as to be rotationally rigid.

5. Extruder device according to one or several of the preceding claims,
**characterized in that**
at least one of the torque transmitting elements (6, 14, 15) is at least partially encompassed by a housing (16), which is rigidly connected to the housing (5) of the extruder worm (4).

6. Extruder device according to claim 5,
**characterized in that**
the housing (12) of the drive motor (1) is connected detachably to the housing (16) which encompasses at least partially the torque transmitting elements (6, 14, 15).

7. Extruder device according to claim 5 or 6,
**characterized in that**
at least one of the torque transmitting elements (6, 14, 15) is braced against the encompassing housing (16) by means of roller bearings and/or ball bearings (17).

8. Extruder device according to the preceding claim,
**characterized in that**
the roller bearing (17) is an angular contact bearing, which can absorb the axial forces.

9. Extruder device according to one of the preceding claims,
**characterized in that**
at least one torque transmitting element (6, 14, 15) is the bushing (14).

## Revendications

1. Extrudeuse avec une vis d'extrudeuse (4) et un entraînement de vis (1, 2),
- qui (1, 2) comprend un moteur d'entraînement (1),
- qui présente un stator extérieur et un rotor (8) situé à l'intérieur,
- qui peut être relié à des éléments de transmission de couple de rotation détachables (6, 14, 15), qui transmettent un couple de rotation entre le rotor (8) et la vis d'extrudeuse (4) et peuvent être relâchés pour des travaux de transformation,
où les éléments de transmission de couple de rotation détachables (6, 14, 15) comprennent un emplacement de transmission de couple de rotation auquel le couple de rotation est transféré par une douille (14) à une section de raccordement (16) entourée au moins partiellement par la douille (14),
**caractérisée**
- **en ce que** le rotor (8) du moteur d'entraînement (1), en cours de fonctionnement, est relié sans engrenage à la vis d'extrudeuse (4) de sorte que lors du fonctionnement, le rotor (8) et la vis d'extrudeuse (4) tournent selon le même nombre de tours,
- **en ce que** la douille est fixée à un côté frontal du rotor (8) du moteur d'entraînement (1) et
- **en ce que** l'emplacement de transmission de couple de rotation se situe dans la direction axiale à l'extérieur du rotor (8).

2. Extrudeuse selon la revendication 1, **caractérisée en ce qu'**à la fois la douille et aussi la section de raccordement se situent complètement à l'extérieur du rotor.

3. Extrudeuse selon l'une des revendications précédentes, **caractérisée en ce que** les éléments de transmission de couple de rotation (6, 14, 15) sont disposés entre le rotor (8) et la vis d'extrudeuse (14).

4. Extrudeuse selon l'une ou plusieurs des revendications précédentes, **caractérisée en ce que** les éléments de transmission de couple de rotation (6, 14, 15) comprennent un assemblage à vissage (15) s'étendant axialement au moyen duquel la douille (14) et la section de raccordement (6) peuvent être reliées de façon à résister à la rotation.

5. Extrudeuse selon l'une ou plusieurs des revendications précédentes, **caractérisée en ce qu'**au moins l'un des éléments de transmission de couple de rotation (6, 14, 15) est entouré au moins partiellement par un boîtier (16) qui est relié solidement au boîtier (5) de la vis d'extrudeuse (4) .

6. Extrudeuse selon la revendication 5, **caractérisée en ce que** le boîtier (12) du moteur d'entraînement (1) est relié amoviblement au boîtier (16) qui entoure au moins partiellement les éléments de transmission de couple de rotation (6, 14, 15).

7. Extrudeuse selon la revendication 5 ou 6, **caractérisée en ce qu'**au moins un des éléments de transmission de couple de rotation (6, 14, 15) s'appuie au moyen d'un palier à roulement et/ou à billes (17) au boîtier environnant (16).

8. Extrudeuse selon la revendication précédente, **caractérisée en ce que** le palier à roulement (17) est un palier incliné qui peut recevoir des forces axiales.

9. Extrudeuse selon l'une des deux revendications précédentes, **caractérisée en ce qu'**au moins un élément de transmission de couple de rotation précité (6, 14, 15) est la douille (14).
